# EUROPEAN PATENT APPLICATION

(11) **EP 0 615 191 A1**
(43) Date of publication of application: **14.09.1994**
(21) Application number: 94300986.0
(22) Date of filing: 10.02.1994
(51) Int. Cl.: G06F 12/08

(54) **Hierarchic storage management mechanism**

(30) Priority: 09.03.1993 GB 9304831
(71) Applicant: INTERNATIONAL COMPUTERS LIMITED, Putney, London, SW15 1SW (GB)
(72) Inventor: Hilditch, Albert Stephen, Wokingham, Berkshire RG11 1WE (GB)
(74) Representative: Guyatt, Derek Charles

(57) **Abstract**

A data processing system has a hierarchical storage system comprising first and second storage levels, the second storage level being of larger size and slower access time than the first level. For example, the first level comprises a magnetic fixed disk store and the second level comprises an optical disk jukebox. Each level holds a number of data sectors. Sectors are staged from the second storage level to the first storage level when required, and least recently used data sectors are pre-staged from the first storage level to the second storage level, in advance of their deletion from the first storage level. Previously pre-staged sectors are deleted from the first storage level only when space is required in the first storage level for staging in one or more sectors from the second storage level. Thus, staging and prestaging are performed on the basis of data sectors, rather than files.

## Description

### Background to the Invention

This invention relates to hierarchic storage management mechanisms for computer systems.

In a computer system data needs to be managed safely, efficiently and easily. One aspect of data management is space allocation and what to do when space limitations are exceeded.

A hierarchic storage management mechanism automatically controls the space allocation of data by moving data up and down a storage hierarchy comprising a number of storage levels. As data is moved down the hierarchy, it is stored in slower, larger and cheaper media. The lowest levels of the storage hierarchy may comprise, for example, optical discs, or magnetic tapes, using robotically loaded or on-the-shelf media. Higher levels may include, for example, fixed media devices, such as fixed disc drives.

The aim of hierarchic storage management is to store data in the storage hierarchy according to its usage: the more frequently used data is higher up the storage hierarchy. If data has not been used for a while, it is "staged" to lower levels of the storage hierarchy. If data is accessed, it is transferred as soon as possible to the top of the hierarchy. The usefulness of hierarchic storage management is ensured by the observation that if data has been accessed recently, it is more likely to be accessed in the near future than other data.

In order to create space at a higher level of the hierarchy, data must be staged to a lower level and deleted from the higher level. It is known to perform this in two phases: pre-staging and physical deletion. In pre-staging, the least used data is copied from the higher level to the lower level, without actually deleting it. When space is required in the higher level, selected pre-staged data is then deleted from that level, freeing up space.

In known hierarchical management mechanisms, staging and pre-staging is carried out at the level of data files. That is, data files are copied as a whole between levels, and are deleted as a whole to make space. The object of the present invention is to improve on such conventional mechanisms, in order to provide a more flexible and more generally useful hierarchical management mechanism.

### Summary of the Invention

According to the invention there is provided a data processing system comprising:
a) a first storage level holding a plurality of data sectors,
b) a second storage level of larger size and slower access time than the first storage level,
c) means for staging in one or more sectors from the second storage level to the first storage level when required,
d) means for pre-staging a plurality of least recently used data sectors from the first storage level to the second storage level, in advance of their deletion from the first storage level, and
e) means for deleting previously pre-staged sectors from the first storage level only when space is required in the first storage level for staging in one or more sectors from the second storage level.

It can be seen that, in the present invention, staging and pre-staging are carried out on the basis of data sectors, rather than files. This provides considerably greater flexibility.

### Brief Description of the Drawings

Figure 1 is an overall block diagram of a hierarchic storage management system in accordance with the invention.

Figure 2 is a schematic diagram indicating the actions taken by the system when a virtual sector is accessed.

Figure 3 is a schematic diagram indicating the actions taken by the system when creating a new staging candidates list (SCL).

### Description of an Embodiment of the Invention

One data processing system including a hierarchic storage management system in accordance with the invention will now be described by way of example with reference to the accompanying drawings.

### Overview of the System

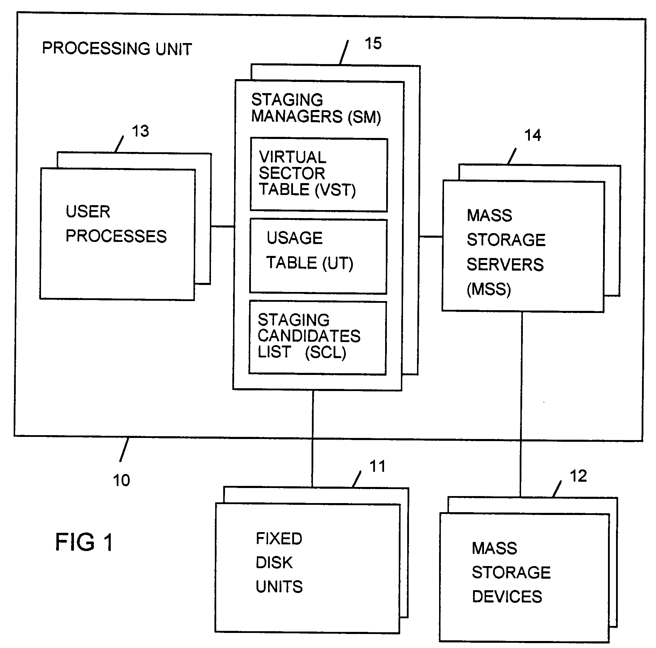

Referring to Figure 1, the data processing system comprises a central processing unit 10, which is coupled to one or more fixed disc units 11 and one or more mass storage devices 12. Each of the mass storage devices may, for example, be a writable optical disc unit, with a robotic disc loading mechanism, such as for example a juke-box arrangement. The fixed discs and mass storage form a two-level storage hierarchy.

For the purposes of management, the fixed disc storage space is organised into physical sectors and partitions. A physical sector is typically 512 bytes. A partition can be a part or the whole of a disc.

The central processing unit includes a number of user processes 13 that require to access data in the storage hierarchy. These user processes may, for example, be database programs that require to access data stored in database files. Each user process views the data as being organised into virtual disc sectors within a disc partition, each virtual sector having a virtual sector identifier. The data for each virtual sector can either be held solely on fixed disc as one or more physical sectors, or held solely in a mass storage device as a sequence of bits, or held both on fixed disc and in mass storage. The fact that a virtual sector is composed of a number of physical sectors is not normally visible to the user processes: to the user processes these virtual sectors appear identical to physical disc sectors of the same size. The physical sector or sectors associated with a virtual sector may be moved to a different fixed disc, or even staged to mass storage, without the user process being aware of this.

The central processing unit also includes one or more mass storage servers (MSS) 14, and one or more staging managers (SM) 15. Each MSS manages the data on one of the mass storage devices and conforms to the IEEE Mass Storage Reference Model. Data is transferred between an SM and an MSS in the form of disc sectors. Upon receipt of sector data from an SM, the MSS stores the data in the associated mass storage device and returns a system-wide unique MSS identifier to the SM. Upon receipt of a valid MSS identifier from an SM, the MSS retrieves the corresponding sector data from its associated mass storage device and returns it to the SM.

Each SM manages the data stored in the physical disc sectors of a particular disc partition, there being one SM for each partition on the fixed discs 11. The SMs receive data access requests from the user processes, requesting to read or update specified virtual data sectors. The SM maps the virtual sector identifiers on to the physical disc sectors, and also controls staging and pre-staging of data between the fixed discs and the mass storage, as will be described.

Each SM contains a virtual sector table (VST), a usage table (UT), and a staging candidates list (SCL). The VST contains an entry for each virtual sector managed by the SM. If a virtual sector is on fixed disc, its VST entry contains one or more physical disc sector identifiers, indicating the physical disc sectors in which the virtual sector is stored. If the virtual sector is held in mass storage its VST entry contains an MSS identifier. If the virtual sector exists both on fixed disc and in mass storage its VST entry contains both physical sector identifiers and an MSS identifier.

The UT contains an entry for each virtual sector managed by the SM. Each entry holds an indication of when the virtual sector was last accessed. This may consist of a timestamp, or a sequence count.

The SCL consists of a list of virtual sectors that have been pre-staged to mass storage and which are therefore available for deletion when space is required in the fixed disc.

Each SM makes use of two threshold values defined by the system administrator and referred to herein as the high-water mark and low-water mark. Each SM (and hence each disc partition) may have different values set for these thresholds. The low-water mark represents the normal maximum disc usage that the administrator requires for the disc partition. The high-water mark represents the disc usage level that triggers immediate deletion of physical sectors, to make space for new data.

### The Staging Mechanism: data access

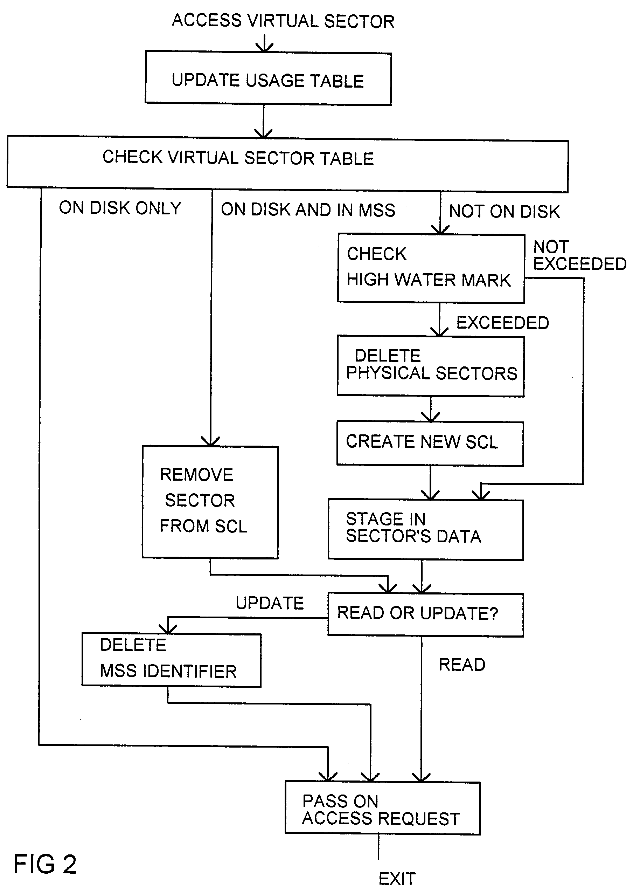

Referring to Figure 2, when a user process wishes to access the data within a virtual sector, either to read or to update, it sends an access request to the SM that manages the partition in question. The SM then takes the following steps:
1) The SM updates the UT to indicate that the virtual sector has been accessed.
2) The SM accesses the entry for the virtual sector in the VST to check whether the data is on fixed disc, in mass storage, or both.
3) If the data is both on fixed disc and in mass store, the SM removes the virtual sector identifier of the data from the SCL.
4) If the data is not on fixed disc, the high-water mark is checked to see if there is room in the disc partition for the sector.
5) If the high-water mark has been exceeded, the SM deletes physical sectors from the fixed disc using the SCL until the low-water mark is reached.
6) The SM then creates a new SCL, as will be described below in more detail.
7) If the data is not on fixed disc and there is currently enough room in the disc partition to store the data sector, a call is made to the relevant MSS to stage-in the sector. The call includes the MSS identifier of the sector.
8) If this is an update request, the MSS identifier of the data is deleted from the VST entry. A deletion message is also passed to the relevant MSS, requesting it to delete the data from the mass storage.
9) If the data was already on fixed disc, or has now been staged-in from an MSS, the access request is passed on to the relevant disc device driver, so that the data can be accessed on the fixed disc.

### The Staging Mechanism: SCL Creation

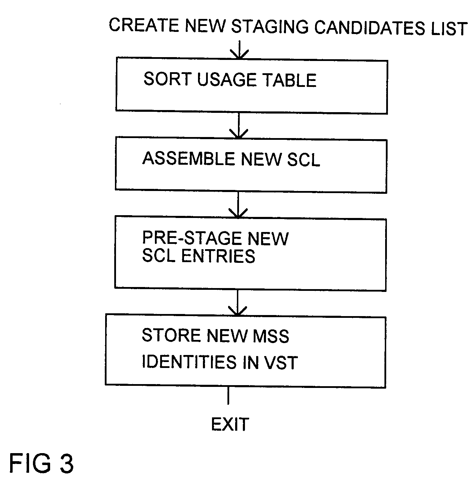

Figure 3 shows the operation of the SM when it creates a new SCL.
1) The SM first sorts the UT into recency of usage order.
2) The SM then scans through the sorted UT, starting from the entry corresponding to the least recently accessed virtual sector, so as to assemble a new SCL, containing sufficient virtual sectors to return the usage level of the disc partition from the high-water mark to the low-water mark.
3) The SM then pre-stages each virtual sector identified by the new SCL, by sending that sector to a selected MSS. The MSS stores the sector data in its associated mass storage device, and returns an MSS identifier for the sector.
4) When the MSS identifiers are returned from the MSS, they are stored in the VST entry for the virtual sector.

## Claims

1. A data processing system comprising:
a) a first storage level holding a plurality of data sectors,
b) a second storage level of larger size and slower access time than the first storage level,
c) means for staging in one or more sectors from the second storage level to the first storage level when required,
d) means for pre-staging a plurality of least recently used data sectors from the first storage level to the second storage level, in advance of their deletion from the first storage level, and
e) means for deleting previously pre-staged sectors from the first storage level only when space is required in the first storage level for staging in one or more sectors from the second storage level.

2. A system according to Claim 1 wherein sectors are deleted from the first storage level when the quantity of data held in the first storage level exceeds a first predetermined threshold value, and wherein sufficient previously staged sectors are deleted from said first storage level in order to reduce the quantity of data in the first storage level to a second predetermined threshold value, lower than said first predetermined threshold value.

3. A system according to Claim 1 or 2 including means for maintaining a virtual sector table containing an entry for each of a number of virtual sectors, each entry containing, for a virtual sector whose data is in the first storage level, one or more identifiers defining the location of the virtual sector data in the first storage level and each entry containing, for a virtual sector whose data is in the second storage level, an identifier defining the location of the sector data in the second storage level.

4. A system according to Claim 3 further including means for maintaining a usage table indicating the recency of use of each virtual sector.

5. A system according to Claim 3 or 4 further including means for creating a staging candidates list containing a list of a least recently used virtual sectors, and means for pre-staging all the virtual sectors on that list to the second storage level.

6. A data processing system in accordance with any preceding Claim wherein said second storage level comprises a robotically controlled removable media mass storage device.

7. A data processing system in accordance with any preceding Claim wherein said first storage level comprises a fixed media storage device.
